# EUROPÄISCHE PATENTSCHRIFT

(11) **EP 2 896 950 B1**
(45) Veröffentlichungstag und Bekanntmachung des Hinweises auf die Patenterteilung: **08.04.2020**
(21) Anmeldenummer: 14002467.0
(22) Anmeldetag: 16.07.2014
(51) Int. Cl.: G01M 13/005, G01N 19/02, G01N 3/56

(54) **Prüfstandsvorrichtung zum tribologischen Testen von Kolbenring-Zylinderlaufbahn-Systemen**
Testbench for tribological test of piston ring/cylinder systems
Dispositif de test tribologique pour systèmes piston/cylindre

(30) Priorität: 26.09.2013 DE 102013016004
(43) Veröffentlichungstag der Anmeldung: 22.07.2015
(73) Patentinhaber: MAN Truck & Bus SE, 80995 München (DE)
(72) Erfinder: Beau, Patrick, 90441 Nürnberg (DE)
(74) Vertreter: Liebl, Thomas

(56) Entgegenhaltungen:
- DE-A1-102009 008 272
- KR-A- 20110 095 664
- Anonymous: "Kolben (Technik) - Wikipedia", , 8 August 2013 (2013-08-08), XP055424135, Retrieved from the Internet: URL:https://de.wikipedia.org/w/index.php?t itle=Kolben_(Technik)&oldid=121319666 [retrieved on 2017-11-13]

## Beschreibung

Die Erfindung betrifft eine Prüfstandsvorrichtung, insbesondere ein Tribometer, nach dem Oberbegriff des Patentanspruches 1.

Für eine ausgiebige und insbesondere effektive Analyse bzw. Optimierung von Reibsystemen werden heutzutage regelmäßig sogenannte Tribometer verwendet. Hierbei handelt es sich um speziell für die Untersuchung tribologischer Größen, wie beispielsweise Reibung, Verschleiß oder Schmierung, entwickelte Prüfstände. Vor allem in der Fahrzeugentwicklung stellt die Optimierung unterschiedlichster Reibsysteme ein wesentliches Entwicklungsfeld dar, um das Potential von Effizienz- und Lebensdaueroptimierungen auszuschöpfen und zukünftigen Anforderungen gerecht zu werden. Insbesondere das Reibsystem Kolbengruppe-Zylinderlaufbahn spielt dabei eine wichtige Rolle, da hier bis zu 50 Prozent der Gesamtreibungsverluste eines Verbrennungsmotors anfallen können.

Aus der DE 10 2009 008 272 A1 ist ein Tribometerprüfstand bekannt, mittels dem Reibung und Verschleiß zwischen einem beispielsweise aus einem Zylinderkurbelgehäuse oder aus einer Zylinderlaufbuchse hergestellten Zylinderlaufbahnsegment und einem Kolbenring oder einem Kolbenringsegment gemessen werden kann. Der Kolbenring ist hier an einem massiven, ortsfesten Halter befestigt. Das mit dem Kolbenring in Anlage bringbare Zylinderlaufbahnsegment ist an einem Verfahrschlitten befestigt, der relativ zu dem Halter mit einem definierten Hub in einer definierten Richtung oszillierend hin- und her bewegt werden kann. Durch die Bewegung des an dem Kolbenring anliegenden Zylinderlaufbahnsegments relativ zu dem Kolbenring sollen somit die Vorgänge in einem Verbrennungsmotor simuliert werden. Des Weiteren weist der Verfahrschlitten ein Heizelement auf, mittels dem das Zylinderlaufbahnsegment auf eine definierte Temperatur aufgeheizt werden kann. Zudem kann der Kolbenring mittels Gewichten mit einer definierten Anpresskraft gegen den Kolbenring gepresst werden. Durch die Verwendung des Heizelements und der Gewichte soll die Realitätsnähe der Simulation erhöht werden. Ein solcher Tribometerprüfstand hat jedoch dennoch den Nachteil, dass die Reproduzierbarkeit der Simulationsergebnisse und insbesondere auch die Übertragbarkeit der Simulationsergebnisse auf ein verbrennungsmotorisches Realsystem stark eingeschränkt sind.

Die weitere KR 2011 0095664 A offenbart eine Vorrichtung zur Analyse der Reibung zwischen einem Kolbenringelement und einem Zylinderlaufbahnelement, bei der das Kolbenringelement mittels einer als Spanneinrichtung ausgebildeten Halteeinrichtung relativ zu dem Zylinderlaufbahnelement verlagerbar gehaltert ist.

Es ist daher Aufgabe der Erfindung, eine Prüfstandsvorrichtung, insbesondere ein Tribometer, bereitzustellen, bei dem auf einfache Weise die Reproduzierbarkeit der Simulationsergebnisse und/oder die Übertragbarkeit der Simulationsergebnisse auf das verbrennungsmotorische Realsystem verbessert ist.

Diese Aufgabe wird durch die Merkmale des Patentanspruches 1 gelöst. Bevorzugte Weiterbildungen sind in den Unteransprüchen offenbart.

Gemäß Patentanspruch 1 betrifft die Erfindung eine Prüfstandsvorrichtung, insbesondere ein Tribometer, zur Analyse und/oder Optimierung der tribologischen Eigenschaften in einem Kolbenring-Zylinderlaufbahn-System, mit einem an einer Zylindersegment-Haltevorrichtung gehalterten Zylinderlaufbahn-Segment als Probenkörper, und mit zumindest einem an einer Kolbenring-Haltevorrichtung gehalterten, in eine Anlage mit dem Zylinderlaufbahnsegment bringbaren Kolbenringelement, wobei eine Betätigungsvorrichtung vorgesehen ist, mittels der das Zylinderlaufbahnsegment und/oder das Kolbenringelement dergestalt betätigbar ist oder sind, dass eine Relativverlagerung zueinander in wenigstens eine definierte Raumrichtung, insbesondere in Form einer oszillierenden Bewegung, erfolgt. Erfindungsgemäß weist die Kolbenring-Haltevorrichtung einen, eine ringförmige Außenkontur aufweisenden Kolben mit zumindest einer umfangsseitig umlaufenden Kolbenringnut auf, in der ein Kolbenring als Kolbenringelement angeordnet und/oder eingesetzt ist.

Durch das Anordnen und/oder Einsetzen eines vollständigen Kolbenrings in der umfangsseitigen umlaufenden Kolbenringnut des Kolbens können mittels der erfindungsgemäßen Prüfstandsvorrichtung besonders realitätsnahe Simulationsergebnisse gewonnen werden, da die Abstrahierung im Vergleich zu einem realen System deutlich verringert ist.

Bevorzugt wird das in der Kolbenringnut angeordnete und/oder eingeführte Kolbenringelement mit einem definierten Axialspiel in der Kolbenringnut geführt, so dass der Kolbenring auch eine sogenannte "Twist-Bewegung" in der Kolbenringnut ausführen kann, wie sie bei realen Verhältnissen regelmäßig auftritt.

Weiter erfindungsgemäß weist die Kolbenring-Haltevorrichtung ein den Kolben in Umfangsrichtung zumindest abschnittsweise umgreifendes Zylinderelement auf, das mit seiner Zylinderlauffläche in Anlage mit dem Kolbenringelement ist, wobei das Zylinderelement und der Kolben derart festgelegt sind, dass eine Relativbewegung zwischen dem Zylinderelement und dem Kolben verhindert ist. Auf diese Weise kann sich das Kolbenringelement an der Zylinderlauffläche abstützen und die Realitätsnähe der Simulationen weiter erhöht werden. Bevorzugt kann das Zylinderelement den Kolben vollständig ringförmig umgreifen, so dass sich der Kolbenring über seinen gesamten Umfang an der Zylinderlauffläche abstützen kann und realistische Kolbenring-Tangentialkräfte nachgebildet werden können.

In einer konkreten Ausführungsform können das Zylinderelement und der Kolben an einen, insbesondere quaderförmigen, Aufnahmeblock der Kolbenring-Haltevorrichtung festgelegt sein und der Aufnahmeblock eine Messvorrichtung aufweisen, mittels der ein Reibungskoeffizient zwischen Kolbenring und zur Zylinderlaufbahnsegment ermittelt werden kann. Durch einen solchen Aufbau ist eine zuverlässige und genaue Bestimmung des Reibungskoeffizienten ermöglicht.

In einer weiteren konkreten Ausführung kann das Zylinderelement eine, einen von der Außenseite her freien Zugang zu dem Kolbenringelement bereitstellende fensterartige Zylinderelement-Ausnehmung aufweisen, wobei die Zylinderelement-Ausnehmung derart ausgebildet und/oder angeordnet ist, dass das an der Zylindersegmenthaltevorrichtung gehalterte Zylinderlaufbahnsegment durch die Zylinderelement-Ausnehmung hindurch in Anlage mit dem Kolbenringelement gebracht und relativ zu dem Kolbenringelement in definierte Raumrichtungen verlagert werden kann. Mittels der fensterartigen Zylinderelement-Ausnehmung kann das Zylinderlaufbahnsegment auf einfache Weise mit dem Kolbenringelement in Anlage gebracht werden.

In einer bevorzugten Ausführung kann eine Schmierungsvorrichtung vorgesehen sein, mittels der zumindest den Kontaktbereichen von Kolbenringelement, Kolbenringnut und Zylinderlaufbahnsegment eine definierte Menge an Schmierstoff, insbesondere Schmieröl, zugeführt werden kann. Auf diese Weise kann eine realitätsnahe Schmierung dieser Kontaktbereiche erreicht werden. Bevorzugt kann die definierte Zuführmenge an Schmierstoff in etwa 2,5 Mikroliter pro Minute betragen, um einen Mangelschmierungszustand, wie er beispielsweise im oberen Totpunkt eines Kolbens auftritt, nachzubilden.

Besonders bevorzugt kann der Kolben einen mit der Kolbenringnut strömungstechnisch verbundenen Schmierstoff-Kanal aufweisen, durch und über den der Schmierstoff in die zumindest eine Kolbenringnut gefördert werden kann. Dadurch kann sich die Schmierstoff-Temperatur in dem Schmierstoff-Kanal an die Kolben-Temperatur anpassen. Bevorzugt kann die zumindest eine Kolbenringnut durch zwei voneinander beabstandete Ringstege gebildet sein und der Schmierstoffkanal in wenigstens einen dieser Ringstege mit einer Mündungsöffnung zur Kolbenringnut hin einmünden. Mittels der zur Kolbenringnut hin einmündenden Mündungsöffnung kann der Schmierstoff unmittelbar an das Kolbenringelement befördert werden.

Gemäß einer weiteren Ausführung kann ein Kolben-Heizelement, insbesondere eine Heizpatrone, vorgesehen sein, mittels dem der Kolben auf eine definierte Temperatur, insbesondere in etwa 350 Grad Celsius, aufgeheizt werden kann. Zudem kann ein Zylinderlaufbahnsegment-Heizelement, insbesondere eine Heizfolie, vorgesehen sein, mittels dem das Zylinderlaufbahnsegment auf eine definierte Temperatur, insbesondere in etwa 130 Grad Celsius, aufgeheizt werden kann. Mittels des Kolben-Heizelements und/oder des Zylinderlaufbahn-Heizelements kann die Realitätsnähe der Simulationen weiter erhöht werden.

In einer konkreten Ausgestaltung kann der Aufnahmeblock zumindest abschnittsweise in einem Innenholraum des als Hohlkolben ausgebildeten Kolbens angeordnet sein, wobei der Aufnahmeblock mittels eines zwischen Aufnahmeblock und Kolben angeordneten Adapterelements an den Kolben festgelegt ist, und wobei das Kolben-Heizelement derart an den Aufnahmeblock festgelegt ist, dass die Heizwärme des Kolben-Heizelements über den Aufnahmeblock und das Adapterelement in den Kolben übergeht. Auf diese Weise ist eine besonders effektive Beheizung des Kolbens ermöglicht.

In einer bevorzugten Ausführung kann die Zylindersegment-Haltevorrichtung einen Probehalter und einen an dem Probenhalter festgelegten Probengegenhalter aufweisen, an dem das Zylinderlaufbahnsegment festgelegt ist, wobei der Probengegenhalter derart verschwenkbar und/oder verdrehbar an dem Probenhalter festgelegt ist, dass ein Winkelversatz zwischen einer in Zylinderlaufbahnsegment-Axialrichtung verlaufenden Zylindersegmentachse und einer in Kolbenringelement-Axialrichtung verlaufenden Kolbenringelementachse ausgeglichen und/oder eingestellt werden kann. Durch den Ausgleich und/oder die Einstellung des Winkelversatzes kann ein Kontaktbereich zwischen Kolbenringelement und Zylinderlaufbahnsegment optimiert werden.

Besonders bevorzugt kann eine Blockiereinrichtung vorgesehen sein, mittels der die Verschwenkung und/oder die Verdrehung des Probengegenhalters relativ zu dem Probenhalter blockiert und freigegeben werden kann. Mittels der Blockiereinrichtung ist ein zuverlässiges Blockieren und Freigeben der Verschwenkung und/oder Verdrehung des Probengegenhalters relativ zu dem Probenhalter ermöglicht. Bevorzugt kann die Blockiereinrichtung ein oder mehrere Schraubelemente, insbesondere Kugeldruckschrauben, aufweisen, die zur Blockierung der Verschwenkung und/oder der Verdrehung in den Probenhalter und/oder in den Probengegenhalter einschraubbar sind. Dadurch kann die Verschwenkung und/oder die Verdrehung auf besonders einfache Weise blockiert werden.

In einer bevorzugten Ausführung kann der Probengegenhalter U-förmig ausgebildet sein, wobei das, insbesondere in der Art eines Zylinderkurbelgehäuses gefertigte, Zylinderlaufbahnsegment zwischen den U-Schenkeln des Probengegenhalters angeordnet und/oder an den U-Schenkeln des Probengegenhalters festgelegt ist. Durch diese Bauweise können insbesondere dickwandige Zylinderlaufbahnsegmente auf einfache Weise an der Zylindersegment-Haltevorrichtung festgelegt werden.

In einer alternativen Ausführung kann der Probengegenhalter einen an eine dem Kolbenringelement abgewandte Seite des, insbesondere in der Art einer Zylinderbuchse gefertigten, Zylinderlaufbahnsegments konturangepassten Anlagebereich aufweisen, wobei zur Festlegung des Zylinderlaufbahnsegments an den Probengegenhalter das Zylinderlaufbahnsegment mittels zumindest eines Spannelements insbesondere eines Spannbackens, gegen den Anlagebereich spannbar ist. Dadurch können insbesondere dünnwandige Zylinderlaufbahnsegmente zuverlässig an dem Probengegenhalter festgelegt werden.

Bevorzugt kann eine Anpressvorrichtung vorgesehen sein, mittels der das Zylinderlaufbahnsegment mit einer definierten Anpresskraft gegen das Kolbenringelement gepresst werden kann. Mittels der Anpressvorrichtung können die mit der erfindungsgemäßen Prüfstandsvorrichtung durchgeführten Simulationen variiert und optimiert werden.

Gemäß einer bevorzugten Ausführung kann die Zylindersegment-Haltevorrichtung derart ausgebildet sein, dass die Einstellung und/oder Ausgleichung des Winkelversatzes durch Pressen des Zylinderlaufbahnsegments mit der definierten Anpresskraft gegen das Kolbenringelement erfolgt. Auf diese Weise kann der Winkelversatz besonders einfach eingestellt und/oder ausgeglichen werden. Bevorzugt kann der Probenhalter eine zylinderförmige Ausnehmung aufweisen, in der ein zylinderförmiger Stift des Probengegenhalters mit einem die Einstellung und/oder die Ausgleichung des Winkelversatzes ermöglichenden Radialspiel geführt ist. Dies ermöglicht eine besonders einfache Einstellung und/oder Ausgleichung des Winkelversatzes.

In einer bevorzugten Ausführung kann das Zylinderlaufbahnsegment in Hochachsenrichtung oberhalb des Kolbenringelements angeordnet sein und das Zylinderlaufbahnsegment mit einem Anlagebereich in Anlage mit dem Kolbenringelement bringbar sein, wobei das Zylinderlaufbahnsegment derart an der Zylindersegment-Haltevorrichtung festgelegt ist, dass sich durch Drehen des Zylinderlaufbahnsegments um 180 Grad um eine in Hochachsenrichtung verlaufende Hochachse der Anlagebereich in Zylinderlaufbahnsegment-Axialrichtung verlagert. Dadurch kann ein einzelnes Zylinderlaufbahnsegment für zwei Prüfläufe verwendet werden.

Besonders bevorzugt kann eine Kippvorrichtung vorgesehen sein, mittels der die Zylindersegment-Haltevorrichtung zusammen mit der Kolbenring-Haltevorrichtung von einer horizontalen in eine vertikalen Lage und umgekehrt kippbar sind, wobei in der Horizontallage eine in Kolben-Axialrichtung verlaufende Kolbenachse horizontal verläuft und in der Vertikallage die Kolbenachse vertikal verläuft. So kann die Prüfstandsvorrichtung in der Horizontallage montiert bzw. justiert und in der Vertikallage können realitätsnahe Simulationen durchgeführt werden.

In einer bevorzugten Ausführung kann die Kolbenring-Haltevorrichtung feststehend gehaltert sein und mittels der Betätigungsvorrichtung die Zylindersegment-Haltevorrichtung relativ zu der feststehenden Kolbenring-Haltevorrichtung in die definierten Raumrichtungen, insbesondere in Kolbenaxialrichtung, verlagert werden. Dadurch kann die Relativbewegung zwischen Zylinderlaufbahnsegment und Kolbenringelement auf besonders einfache Weise realisiert werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand der Zeichnungen lediglich beispielhaft erläutert.

Es zeigen:
- Fig. 1: eine Perspektivdarstellung einer beispielhaften Ausführungsform einer erfindungsgemäßen Prüfstandsvorrichtung;
- Fig. 2: die Bauteile der Prüfstandsvorrichtung gemäß Fig. 1 in einer Explosionsdarstellung;
- Fig. 3: eine Schnittdarstellung entlang der Schnittebene A-A der Fig. 1;
- Fig. 4: eine Perspektivdarstellung einer Zylindersegment-Haltevorrichtung;
- Fig. 5: eine perspektivische Darstellung eines ersten Freiheitsgrades der Zylindersegment-Haltevorrichtung;
- Fig. 6: eine Seitenansicht zur Darstellung eines zweiten Freiheitsgrades der Zylindersegment-Haltevorrichtung;
- Fig. 7: die Zylindersegment-Haltevorrichtung gemäß einem ersten Ausführungsbeispiel;
- Fig. 8: die Zylindersegment-Haltevorrichtung gemäß einem zweiten Ausführungsbeispiel; und
- Fig. 9: die Zylindersegment-Haltevorrichtung gemäß Fig. 7 in einer Ansicht von unten.

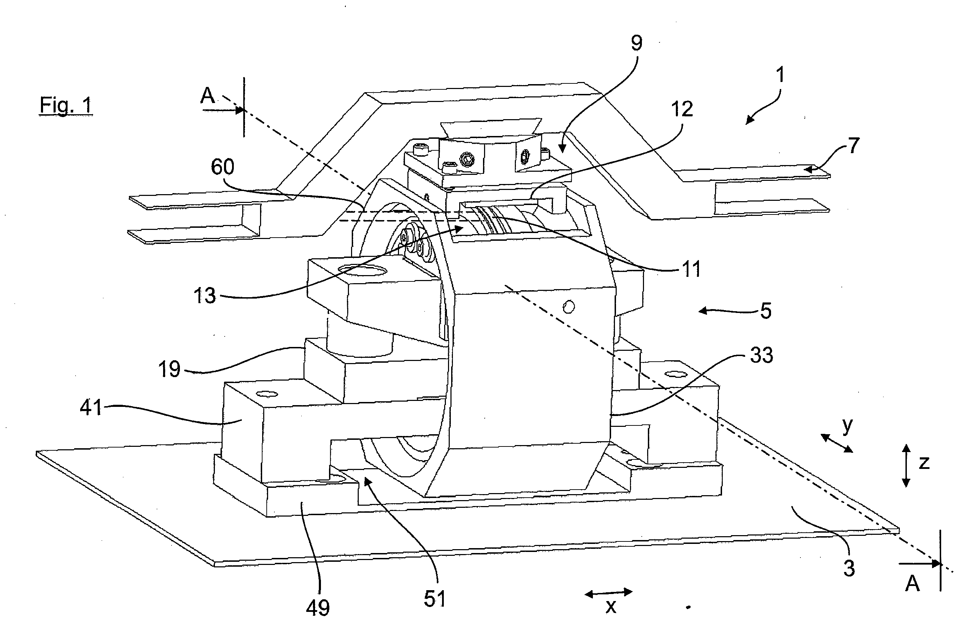

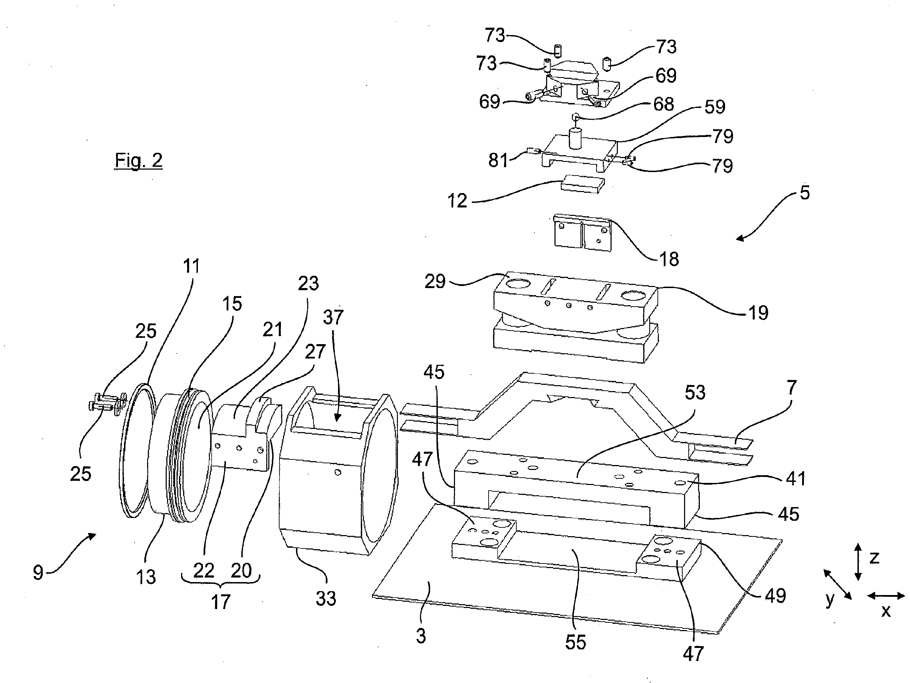

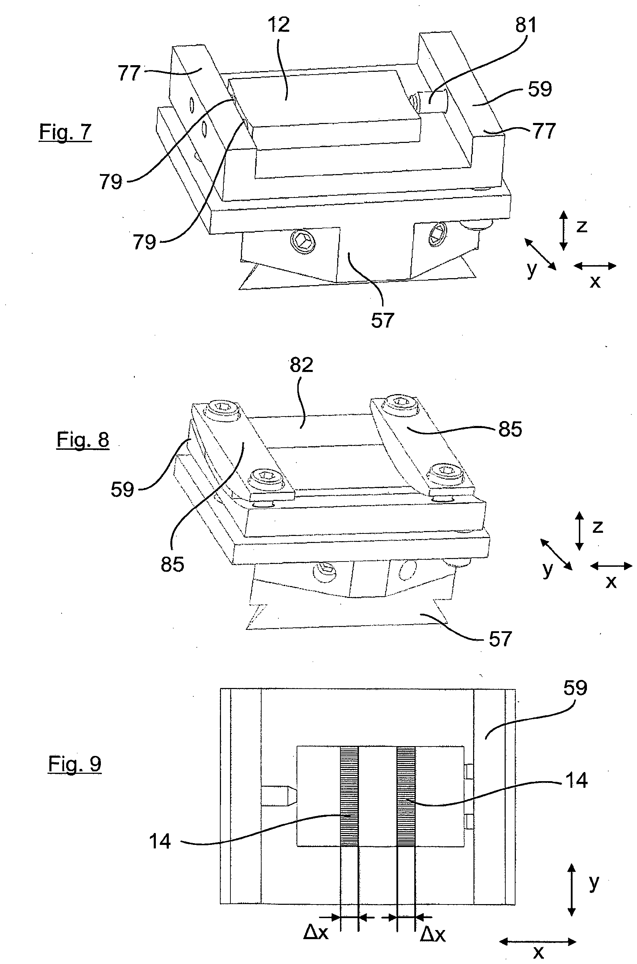

In Fig. 1 ist eine ein Kolbenring-Zylinderlaufbahn-System realitätsnah simulierende Prüfstandsvorrichtung 1 gezeigt. Die Prüfstandsvorrichtung 1 weist eine an einer Fixierplatte 3 festgelegte Kolbenring-Haltevorrichtung 5 und eine an einer Schwinge 7 festgelegte Zylindersegment-Haltevorrichtung 9 auf. Die in Hochachsenrichtung z beabstandet oberhalb der Fixierplatte 3 angeordnete Schwinge 7 ist mittels einer in den Figuren nicht gezeigten Betätigungsvorrichtung relativ zu der ortsfesten Fixierplatte 3 in Längsachsenrichtung x verlagerbar. An der Kolbenring-Haltevorrichtung 5 ist ein vollständiger Kolbenring 11 gehaltert, während an der Zylindersegment-Haltevorrichtung 9 ein in der Art eines Kurbelgehäuses gefertigtes Zylinderlaufbahnsegment 12 (Fig. 2) gehaltert ist. Zur Simulationen der realen Vorgänge in dem Kolbenring-Zylinderlaufbahn-System kann das Zylinderlaufbahnsegment 12 mittels der Betätigungsvorrichtung in Anlage mit dem Kolbenring 11 gebracht und relativ zu dem Kolbenring 11 verlagert werden. Die Verlagerung des Zylinderlaufbahnsegments 12 relativ zu dem Kolbenring 11 erfolgt bevorzugt in Form einer oszillierenden Bewegung über eine definierte Wegstrecke, wodurch sich an dem Zylinderlaufbahnsegment 12 eine Reibspur 14 mit einer Spurbreite Δx (Fig. 9) ausbildet.

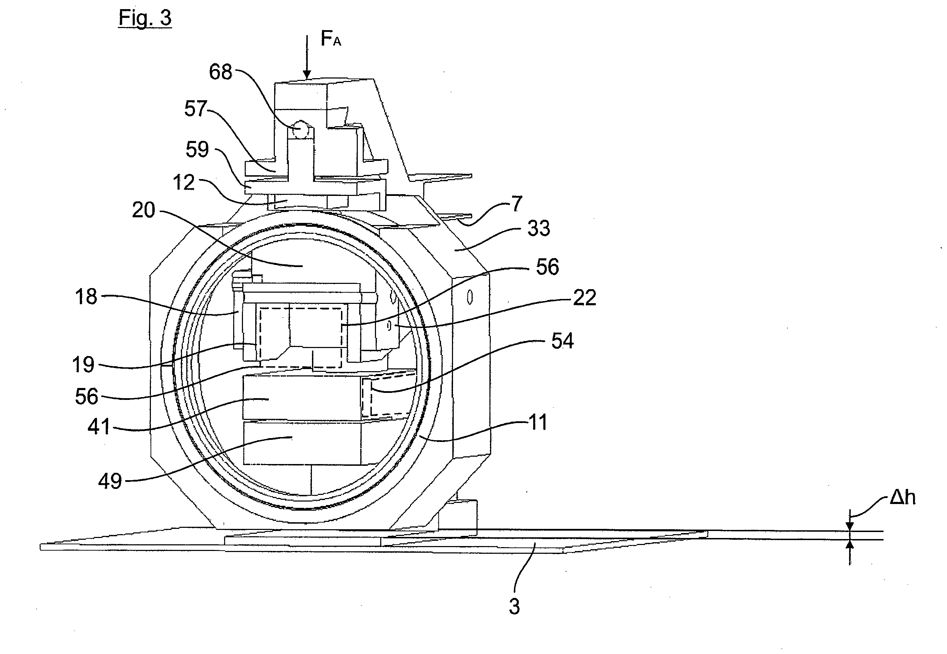

Aus der Fig. 2 geht der detaillierte Aufbau der Kolbenring-Haltevorrichtung 5 und der Zylindersegment-Haltevorrichtung 9 hervor. Die Kolbenring-Haltevorrichtung 5 weist eine aus einem Kolben gefertigte ringförmige Kolbenadaption 13 mit einer umfangsseitig vollständig umlaufenden Kolbenringnut 15 auf, in die der Kolbenring 11 einsetzbar ist. Die Kolbenadaption 13 ist mittels eines Adapterelements 17 und mittels eines plattenförmigen Anschlags 18 an einem quaderförmigen Aufnahmeblock 19 der Kolbenring-Haltevorrichtung 5 festlegbar. Das Adapterelement 17 besteht hier beispielhaft aus einen Adapterkörper 20 und einen in Querachsenrichtung y außen an dem Adapterkörper 20 angeordneten, in Hochachsenrichtung z nach unten von dem Adapterkörper 20 abragenden plattenförmigen Schenkel 22. Zur Festlegung der Kolbenadaption 13 an dem Adapterelement 17 wird die ringförmige Kolbenadaption 13 mit ihrer Innenfläche 21 in eine flächige Anlage mit einer an die Innenfläche 21 konturangepassten Auflagefläche 23 des Adapterkörpers 20 gebracht und mittels mehrerer, hier zweier Schrauben 25, gegen einen in Hochachsenrichtung z nach oben von der Auflagefläche 23 abragenden Steg 27 des Adapterkörpers 20 geklemmt. Weiter ist der plattenförmige Anschlag 18 in Querachsenrichtung y außen, gegenüberliegend zu dem Schenkel 22, an dem Adapterkörper 20 angebunden und bildet zusammen mit diesem und dem Schenkel 22 einen U-förmigen Aufbau aus (Fig. 3). Der Adapterkörper 20 weist, in Hochachsenrichtung z gesehen, unten eine ebene Anlagefläche auf, die in eine flächige Anlage mit einer Oberseite 29 des quaderförmigen Aufnahmeblocks 19 bringbar ist. Die Festlegung des mit der Anlagefläche an dem Aufnahmeblock 19 anliegenden Adapterelements 17 an dem Aufnahmeblock 19 erfolgt hier beispielhaft mittels dreier durch den Schenkel 22, durch den an das Adapterelement 17 angebundenen Anschlag 18 sowie durch den Aufnahmeblock 19 durchgeführten, in Querachsenrichtung y verlaufenden Schraubverbindungen (Fig. 2).

In Fig. 2 ist weiter eine ebenfalls an dem Aufnahmeblock 19 festlegbare, den Kolben vollständig ringförmig umgreifende Zylinderadaption 33 der Kolbenring-Haltevorrichtung 5 gezeigt. Wie in Fig. 3 gezeigt, befindet sich die an dem Aufnahmeblock 19 festgelegte Zylinderadaption 33 mit ihrer Zylinderlauffläche in Anlage mit dem Kolbenring 11. In Hochachsenrichtung z gesehen oben weist die Zylinderadaption 33 eine, einen von der Außenseite her freien Zugang zu dem Kolbenring 11 bereitstellende fensterartige Ausnehmung 37 auf (Fig. 2). Über diese fensterartige Ausnehmung 37 kann das an der Zylindersegment-Haltevorrichtung 9 gehalterte Zylinderlaufbahnsegment 12 in Anlage mit dem Kolbenring 11 gebracht werden und somit relativ zu dem Kolbenring 11 in Längsachsenrichtung x verlagert werden.

Aus Fig. 1 geht weiter hervor, dass der Aufnahmeblock 19 auf einer hier U-förmigen Zwischenplatte 41 aufliegt, bzw. mit der Zwischenplatte 41 verschraubt ist. Die Zwischenplatte 41 weist gemäß der Fig. 2 an ihrem in Längsachsenrichtung x von der Zylinderadaption 33 abragenden Endbereichen in Hochachsenrichtung z nach unten abragende U-Schenkel 45 auf, die in Anlage mit in Hochachsenrichtung z nach oben abragenden U-Schenkeln 47 einer in Hochachsenrichtung z unterhalb der Zwischenplatte angeordneten Uförmigen Grundplatte 49 sind. Die Zwischenplatte 41 und die Grundplatte 49 sind an ihren U-Schenkeln 45 und 47 miteinander verschraubt und bilden einen Freiraum 51 (Fig. 1) aus, durch den die Kolbenadaption 13, der Kolbenring 11 und die Zylinderadaption 33 geführt sind. Gemäß der Fig. 3 sind eine U-Basis 53 der Zwischenplatte 41 und eine U-Basis 55 der Grundplatte 49 derart mit einem Höhenversatz Δh (Fig. 3) voneinander beabstandet, dass die Zylinderadaption 33 außer Anlage mit der U-Basis 55 der Grundplatte 49 ist. Da die Zylinderadaption 33 außer Anlage mit der Grundplatte 49 ist, ist eine genaue Ermittlung eines Reibungskoeffizienten zwischen dem Kolbenring 11 und dem Zylinderlaufbahnsegment 12 mittels einer an dem Aufnahmeblock 19 vorgesehenen, in Fig. 3 mit gestrichelten Linien angedeuteten Messvorrichtung 54 möglich. Des Weiteren ist die Grundplatte 49 in Hochachsenrichtung z unterseitig in Anlage mit der Fixierplatte 3 und mittels Schraubverbindungen an der Fixierplatte 3 befestigt.

Der Aufnahmeblock 19 kann weiter eine, in Fig. 3 mit gestrichelten Linien angedeutete, Heizpatrone 56 aufweisen, mittels der die Kolbenadaption 13 auf eine definierte Temperatur, beispielsweise auf in etwa 350°C, aufheizbar ist. Um einen möglichst hohen Wärmeeintrag in die Kolbenadaption 13 zu gewährleisten, liegen, wie bereits erwähnt, der quaderförmigen Aufnahmeblock 19 mit dem Adaptionselement 17 sowie das Adaptionselement 17 mit der Kolbenadaption 13 in einer flächigen Anlageverbindung aneinander an. Zudem kann die Kolbenring-Haltevorrichtung 5 eine Schmierungsvorrichtung aufweisen, von der in Fig. 1 lediglich eine in die Kolbenringnut 15 mündende, mit gestrichelten Linien angedeutete Förderleitung 60 gezeigt ist. Mittels der Schmierungsvorrichtung kann eine definierte Menge an Schmieröl, zum Beispiel 2,5 Mikroliter pro Minute, in die Kolbenringnut 15 gefördert werden.

Wie in Fig. 2 dargestellt, umfasst die Zylindersegment-Haltevorrichtung 9 weiter einen Probenhalter 57 und einen mittels einer Befestigungsvorrichtung 58 an dem Probenhalter 57 festlegbaren, das Zylinderlaufbahnsegment 12 halternden Probengegenhalter 59.

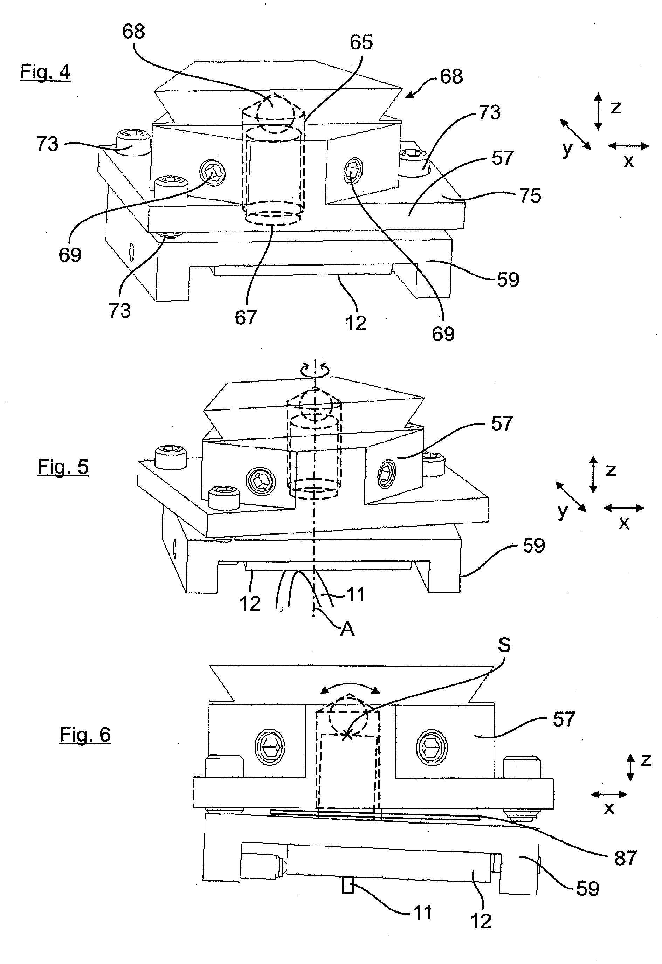

Die Befestigungsvorrichtung 58 ist derart ausgebildet, dass der an dem Probenhalter 57 festgelegte Probengegenhalter 59 relativ zu dem Probenhalter 57 um eine in Hochachsenrichtung verlaufende Achse A verdrehbar (Fig. 5) und um einen Schwenkpunkt S verschwenkbar ist (Fig. 6). Die Verdrehung und die Verschwenkung des Probengegenhalters 59 relativ zu dem Probenhalter 57 ermöglichen den Ausgleich eines Winkelversatzes zwischen einer in Zylinderlaufbahnsegment-Axialrichtung verlaufenden Zylindersegmentachse und einer in Kolbenring-Axialrichtung verlaufenden Kolbenringachse.

Die Befestigungsvorrichtung 58 weist gemäß Fig. 4 weiter eine an dem Probenhalter 57 ausgebildete, in Hochachsenrichtung z verlaufende sowie unterseitig an dem Probenhalter 57 mündende zylinderförmige Ausnehmung 65 auf, in die ein in Hochachsenrichtung z nach oben von dem Probengegenhalter 59 abragender zylinderförmiger Stift 67 mit einem definierten Radialspiel einführbar ist. Der in die Ausnehmung 65 eingeführte Stift 67 befindet sich in Anlage mit einer in einem oberen Endbereich der Ausnehmung 65 angeordneten Kugel 68. Das Radialspiel und die Kugel 68 ermöglichen eine einfache Verdrehung und Verschwenkung des Probengegenhalters 59 relativ zu dem Probenhalter 57.

Die Befestigungsvorrichtung 58 weist weiter zwei in den Probenhalter 57 einschraubbare Kugeldruckschrauben 69 auf, die im eingeschraubten Zustand mit ihrer kugelförmigen Kontaktfläche derart in Anlage mit einem in Umfangsrichtung verlaufenden Wellenprofil des zylinderförmigen Stifts 67 sind, dass die Drehbewegung des Probengegenhalters 59 relativ zu dem Probenhalter 57 gesperrt ist.

Die Befestigungsvorrichtung 58 umfasst hier zudem weitere (hier beispielhaft drei) in den Probenhalter 57 einschraubbare Kugeldruckschrauben 73, mittels denen auch die Schwenkbewegung des Probengegenhalters 59 sperrbar ist. Die hier beispielhaft drei Kugeldruckschrauben 73 bilden, in Hochachsenrichtung z von oben gesehen, ein Dreieck aus und können durch deren Einschrauben in den Probenhalter 57 bzw. durch Verschwenken des Probengegenhalters 59 relativ zu dem Probenhalter 57 in eine Anlage mit einer ebenen Oberseite 75 des Probengegenhalters 59 gebracht werden. Die Sperrung der Schwenkbewegung des Probengegenhalters 59 erfolgt, wenn alle drei Kugeldruckschrauben 73 in eine Anlage mit der Oberseite 75 des Probengegenhalters gebracht sind. Je nachdem, wie tief die Kugeldruckschrauben 73 eingeschraubt sind, ist ein Schwenkwinkel des Probengegenhalters 59 relativ zu dem Probenhalter 57 einstellbar.

Der Ausgleich des Winkelversatzes zwischen der Zylindersegmentachse und der Kolbenringachse erfolgt mittels einer Anpressvorrichtung, die die Zylindersegment-Haltevorrichtung 9 mit einer definierten Anpresskraft F_{A} (Fig. 3) gegen die Kolbenring-Haltevorrichtung 5 presst. Die Anpresskraft F_{A} bewirkt eine Ausgleichsbewegung des relativ zu dem Probenhalter 57 verdrehbaren und verschwenkbaren Probengegenhalters 59 bzw. des daran gehalterten Zylinderlaufbahnsegments 12 und ermöglicht so die Ausbildung eines optimalen Kontakts zwischen Zylinderlaufbahnsegment 12 und Kolbenring 11. Nach Ausgleich des Winkelversatzes werden die Verdrehbarkeit und die Verschwenkbarkeit des Probengegenhalters 59 relativ zu dem Probenhalter 57 gesperrt.

In Fig. 7 ist der das Zylinderlaufbahnsegment 12 halternde U-förmige Probengegenhalter 59 gezeigt. Der U-förmig ausgebildete Probengegenhalter 59 weist in Längsachsenrichtung x vorne und hinten angeordnete, in Hochachsenrichtung z abragende U-Schenkel 77 auf, zwischen denen das Zylinderlaufbahnsegment 12 einspannbar ist. Die Einspannung des Zylinderlaufbahnsegments 12 zwischen den U-Schenkeln 77 erfolgt hier beispielhaft mittels zweier in einen U-Schenkel 77 eingesetzter Zylinderstifte 79 und mittels einer in den anderen U-Schenkel 77 eingeschraubten, das Zylinderlaufbahnsegment 12 gegen die beiden Zylinderstifte 79 drückenden Kugeldruckschraube 81.

Des Weiteren ist das zwischen den U-Schenkeln 77 einspannbare Zylinderlaufbahnsegment 12 sowohl in einer ersten Einspannposition als auch in einer um 180 Grad um eine in Hochachsenrichtung z verlaufende Hochachse gedrehten zweiten Einspannposition an den Probengegenhalter 59 einspannbar.

Gemäß Fig. 9 ist das Zylinderlaufbahnsegment 12 derart an dem Probengegenhalter 59 festgelegt, dass sich durch diese Drehung des Zylinderlaufbahnsegments 12 um 180 Grad die Reibspur mit der Spurbreite Δx in Längsachsenrichtung x verlagert. Auf diese Weise können mit einem einzigen Zylinderlaufbahnsegment 12 zwei Prüfläufe durchgeführt werden.

In der Fig. 8 ist der Probengegenhalter 59 in einer zweiten Ausführungsform gezeigt. Der Probengegenhalter 59 gemäß dieser zweiten Ausführungsform ist derart ausgebildet, dass ein in der Art einer Zylinderbuchse gefertigtes Zylinderlaufbahnsegment 12 an diesem festlegbar ist. Der Probengegenhalter 59 weist eine an das Zylinderlaufbahnsegment 12 konturangepasste Anlagefläche 82 auf, die mit der dem Kolbenring 11 abgewandten Seite des Zylinderlaufbahnsegments 12 in eine flächige Anlage bringbar ist. Mittels ebenfalls an das Zylinderlaufbahnsegment 12 konturangepassten Spannbacken 85 kann das Zylinderlaufbahnsegment 12 gegen die Anlagefläche 82 gepresst werden.

Des Weiteren kann die Zylindersegment-Haltevorrichtung 9 eine zwischen dem Probenhalter 57 und dem Probengegenhalter 59 eingespannte Heizfolie 87 (Fig. 6) aufweisen, mittels der das Zylinderlaufbahnsegment 12 auf eine definierte Temperatur, zum Beispiel auf in etwa 130°C, aufheizbar ist.

### Bezugszeichenliste

- 1: Prüfstandsvorrichtung
- 3: Fixierplatte
- 5: Kolbenring-Haltevorrichtung
- 7: Schwinge
- 9: Zylindersegment-Haltevorrichtung
- 11: Kolbenring
- 12: Zylinderlaufbahnsegment
- 13: Kolbenadaption
- 14: Reibspur
- 15: Kolbenringnut
- 17: Adapterelement
- 18: Anschlag
- 19: Aufnahmeblock
- 20: Adapterkörper
- 21: Innenfläche Kolbenadaption
- 22: Schenkel
- 23: Auflagefläche Adapterkörper
- 25: Schrauben
- 27: Steg
- 29: Oberseite Aufnahmeblock
- 33: Zylinderadaption
- 37: Ausnehmung Zylinderadaption
- 41: Zwischenplatte
- 45: U-Schenkel Zwischenplatte
- 47: U-Schenkel Grundplatte
- 49: Grundplatte
- 51: Freiraum
- 53: U-Basis Zwischenplatte
- 54: Messvorrichtung
- 55: U-Basis Grundplatte
- 56: Heizpatrone
- 57: Probenhalter
- 58: Befestigungsvorrichtung
- 59: Probengegenhalter
- 60: Förderleitung Schmierungsvorrichtung
- 65: zylinderförmige Ausnehmung
- 67: zylinderförmiger Stift
- 68: Kugel
- 69: Kugeldruckschraube
- 73: Kugeldruckschraube
- 75: Oberseite Probengegenhalter
- 77: U-Schenkel Probengegenhalter
- 79: Zylinderstift
- 81: Kugeldruckschraube
- 82: Anlagefläche Probengegenhalter
- 85: Spannbacken
- 87: Heizfolie

- A: Achse
- F_{A}: Anpresskraft
- S: Schwenkpunkt
- Δh: Höhenversatz
- Δx: Spurbreite

## Patentansprüche

1. Prüfstandsvorrichtung, insbesondere Tribometer, zur Analyse und/oder Optimierung der tribologischen Eigenschaften in einem Kolbenring-Zylinderlaufbahn-System, mit einem an einer Zylindersegment-Haltevorrichtung (9) gehalterten Zylinderlaufbahnsegment (12) als Probenkörper, und mit zumindest einem an einer Kolbenring-Haltevorrichtung (5) gehalterten, in eine Anlage mit dem Zylinderlaufbahnsegment (12) bringbaren Kolbenringelement (11), wobei eine Betätigungsvorrichtung vorgesehen ist, mittels der das Zylinderlaufbahnsegment (12) und/oder das Kolbenringelement (11) dergestalt betätigbar ist oder sind, dass eine Relativverlagerung zueinander in wenigstens eine definierte Raumrichtung, insbesondere in Form einer oszillierenden Bewegung, erfolgt, wobei die Kolbenring-Haltevorrichtung (5) einen, eine ringförmige Außenkontur aufweisenden Kolben (13) mit zumindest einer umfangsseitig umlaufenden Kolbenringnut (15) aufweist, in der ein Kolbenring (11) als Kolbenringelement angeordnet und/oder eingesetzt ist, **dadurch gekennzeichnet, dass** die Kolbenring-Haltevorrichtung (5) ein den Kolben (13) in Umfangsrichtung zumindest abschnittsweise umgreifendes, insbesondere vollständig ringförmig umgreifendes, Zylinderelement (33) aufweist, das mit seiner Zylinderlauffläche in Anlage mit dem Kolbenringelement (11) ist, wobei das Zylinderelement (33) und der Kolben (13) derart festgelegt sind, dass eine Relativbewegung zwischen Zylinderelement (33) und dem Kolben (13) verhindert ist.

2. Prüfstandsvorrichtung nach Anspruch 1, **dadurch gekennzeichnet, dass** das in der Kolbenringnut (15) angeordnete und/oder eingeführte Kolbenringelement (11) mit einem definierten Axialspiel in der Kolbenringnut (15) geführt ist.

3. Prüfstandsvorrichtung nach Anspruch 1 oder 2, **dadurch gekennzeichnet, dass** das Zylinderelement (33) und der Kolben (13) an einem, insbesondere quaderförmigen, Aufnahmeblock (19) der Kolbenring-Haltevorrichtung (5) festgelegt sind, und dass der Aufnahmeblock (19) eine Messvorrichtung (54) aufweist, mittels der ein Reibungskoeffizient zwischen Kolbenringelement (11) und Zylinderlaufbahnsegment (12) ermittelbar ist.

4. Prüfstandsvorrichtung nach einem der vorhergehenden Ansprüche, **dadurch gekennzeichnet, dass** das Zylinderelement (33) eine, einen von der Außenseite her freien Zugang zu dem Kolbenringelement (11) bereitstellende fensterartige Zylinderelement-Ausnehmung (37) aufweist, wobei die Zylinderelement-Ausnehmung (37) derart ausgebildet und/oder angeordnet ist, dass das an der Zylindersegment-Haltevorrichtung (9) gehalterte Zylinderlaufbahnsegment (12) durch die Zylinderelement-Ausnehmung (37) hindurch in Anlage mit dem Kolbenringelement (11) bringbar und relativ zu dem Kolbenringelement (11) in definierte Raumrichtungen verlagerbar ist.

5. Prüfstandsvorrichtung nach einem der vorhergehenden Ansprüche, **dadurch gekennzeichnet, dass** eine Schmierungsvorrichtung (60) vorgesehen ist, mittels der zumindest den Kontaktbereichen von Kolbenringelement (11), Kolbenringnut (15) und Zylinderlaufbahnsegment (12) eine definierte Menge an Schmierstoff, insbesondere Schmieröl, zuführbar ist, wobei bevorzugt vorgesehen ist, dass die definierte Zuführmenge an Schmierstoff in etwa 2,5 µl/min beträgt.

6. Prüfstandsvorrichtung nach Anspruch 5, **dadurch gekennzeichnet, dass** der Kolben (13) einen mit der Kolbenringnut (15) strömungstechnisch verbundenen Schmierstoff-Kanal aufweist, durch und über den der Schmierstoff in die zumindest eine Kolbenringnut (15) förderbar ist, wobei bevorzugt vorgesehen ist, dass die zumindest eine Kolbenringnut (15) durch zwei voneinander beabstandete Ringstege gebildet ist und der Schmierstoff-Kanal in wenigstens einen dieser Ringstege mit einer Mündungsöffnung zur Kolbenringnut (15) hin einmündet.

7. Prüfstandsvorrichtung nach einem der vorhergehenden Ansprüche, **dadurch gekennzeichnet, dass** ein Kolben-Heizelement (56), insbesondere eine Heizpatrone, vorgesehen ist, mittels dem der Kolben (13) auf eine definierte Temperatur, insbesondere in etwa 350°C, aufheizbar ist, und/oder dass ein Zylinderlaufbahnsegment-Heizelement (87), insbesondere eine Heizfolie, vorgesehen ist, mittels dem das Zylinderlaufbahnsegment (12) auf eine definierte Temperatur, insbesondere in etwa 130°C, aufheizbar ist.

8. Prüfstandsvorrichtung nach einem der Ansprüche 3 bis 7, **dadurch gekennzeichnet, dass** der Aufnahmeblock (19) zumindest abschnittsweise in einem Innenhohlraum des als Hohlkolben ausgebildeten Kolbens (13) angeordnet ist, wobei der Aufnahmeblock (19) mittels eines zwischen Aufnahmeblock (19) und Kolben (13) angeordneten Adapterelements (17) an dem Kolben (13) festgelegt ist, und wobei bevorzugt vorgesehen ist, dass das Kolben-Heizelement (56) derart an dem Aufnahmeblock (19) festgelegt ist, dass die Heizwärme des Kolben-Heizelements (56) über den Aufnahmeblock (19) und das Adapterelement (17) in den Kolben (13) übergeht.

9. Prüfstandsvorrichtung nach einem der vorhergehenden Ansprüche, **dadurch gekennzeichnet, dass** die Zylindersegment-Haltevorrichtung (9) einen Probenhalter (57) und einen an dem Probenhalter (57) festgelegten Probengegenhalter (59) aufweist, an dem das Zylinderlaufbahnsegment (12) festgelegt ist, wobei der Probengegenhalter (59) derart verschwenkbar und/oder verdrehbar an dem Probenhalter (57) festgelegt ist, dass ein Winkelversatz zwischen einer in Zylinderlaufbahnsegment-Axialrichtung verlaufenden Zylindersegmentachse und einer in Kolbenringelement-Axialrichtung verlaufenden Kolbenringelementachse ausgleichbar und/oder einstellbar ist.

10. Prüfstandsvorrichtung nach Anspruch 9, **dadurch gekennzeichnet, dass** eine Blockiervorrichtung vorgesehen ist, mittels der die Verschwenkung und/oder die Verdrehung des Probengegenhalters (59) relativ zu dem Probenhalter (57) blockierbar und freigebbar ist, wobei bevorzugt vorgesehen ist, dass die Blockiereinrichtung ein oder mehrere Schraubelemente (69, 73) insbesondere Kugeldruckschrauben, aufweist, die zur Blockierung der Verschwenkung und/oder der Verdrehung in den Probenhalter (57) und/oder in den Probengegenhalter (59) einschraubbar sind.

11. Prüfstandsvorrichtung nach Anspruch 9 oder 10, **dadurch gekennzeichnet, dass** der Probengegenhalter (59) U-förmig ausgebildet ist, wobei das, insbesondere in der Art eines Zylinderkurbelgehäuses gefertigte, Zylinderlaufbahnsegment (12) zwischen den U-Schenkeln (77) des Probengegenhalters (59) angeordnet und/oder an den U-Schenkeln (77) des Probengegenhalters (59) festgelegt ist.

12. Prüfstandsvorrichtung nach Anspruch 9 oder 10, **dadurch gekennzeichnet, dass** der Probengegenhalter (59) einen an eine dem Kolbenringelement (11) abgewandte Seite des, insbesondere in der Art einer Zylinderbuchse gefertigten, Zylinderlaufbahnsegments (12) konturangepassten Anlagebereich aufweist, wobei zur Festlegung des Zylinderlaufbahnsegments (12) an dem Probengegenhalter (59) das Zylinderlaufbahnsegment (12) mittels zumindest eines Spannelements (85), insbesondere eines Spannbackens, gegen den Anlagebereich spannbar ist.

13. Prüfstandsvorrichtung nach einem der vorhergehenden Ansprüche, **dadurch gekennzeichnet, dass** eine Anpressvorrichtung vorgesehen ist, mittels der das Zylinderlaufbahnsegment (12) mit einer definierten Anpresskraft (F_{A}) gegen das Kolbenringelement (11) pressbar ist.

14. Prüfstandsvorrichtung nach Anspruch 13, **dadurch gekennzeichnet, dass** die Zylindersegment-Haltevorrichtung (9) derart ausgebildet ist, dass die Einstellung und/oder Ausgleichung des Winkelversatzes durch Pressen des Zylinderlaufbahnsegments (12) mit der definierten Anpresskraft (F_{A}) gegen das Kolbenringelement (11) erfolgt, wobei bevorzugt vorgesehen ist, dass der Probenhalter (57) eine zylinderförmige Ausnehmung (65) aufweist, in der ein zylinderförmiger Stift (67) des Probengegenhalters (59) mit einem die Einstellung und/oder die Ausgleichung des Winkelversatzes ermöglichenden Radialspiel geführt ist.

15. Prüfstandsvorrichtung nach einem der vorhergehenden Ansprüche, **dadurch gekennzeichnet, dass** das Zylinderlaufbahnsegment (12) in Hochachsenrichtung (z) oberhalb des Kolbenringelements (11) angeordnet ist, und dass das Zylinderlaufbahnsegment (12) an einem Anlagebereich in Anlage mit dem Kolbenringelement (11) bringbar ist, wobei das Zylinderlaufbahnsegment (12) derart an der Zylindersegment-Haltevorrichtung (9) festgelegt ist, dass sich durch Drehen des Zylinderlaufbahnsegments (12) um 180 Grad um eine in Hochachsenrichtung (z) verlaufende Achse (A) der Anlagebereich in Zylinderlaufbahnsegment-Axialrichtung verlagert.

16. Prüfstandsvorrichtung nach einem der vorhergehenden Ansprüche, **dadurch gekennzeichnet, dass** eine Kippvorrichtung vorgesehen ist, mittels der die Zylindersegment-Haltevorrichtung (9) zusammen mit der Kolbenring-Haltevorrichtung (5) von einer Horizontallage in eine Vertikallage und umgekehrt kippbar sind, wobei in der Horizontallage eine in Kolben-Axialrichtung verlaufende Kolbenachse horizontal verläuft und in der Vertikallage die Kolbenachse vertikal verläuft.

17. Prüfstandsvorrichtung nach einem der vorhergehenden Ansprüche, **dadurch gekennzeichnet, dass** die Kolbenring-Haltevorrichtung (5) feststehend gehaltert ist, und dass mittels der Betätigungsvorrichtung die Zylindersegmenthaltevorrichtung (9) relativ zu der feststehenden Kolbenring-Haltevorrichtung (5) in die definierten Raumrichtungen, insbesondere in Kolben-Axialrichtung, verlagerbar ist.

## Claims

1. Test bench device, in particular tribometer, for analysing and/or optimizing the tribological properties in a piston ring/cylinder barrel system, having a cylinder barrel segment (12) mounted on a cylinder segment holding device (9) as a test specimen, and having at least one piston ring element (11) which is mounted on a piston ring holding device (5) and which can be brought into contact with the cylinder barrel segment (12), wherein an actuating device is provided, by means of which the cylinder barrel segment (12) and/or the piston ring element (11) can be actuated in such a way that a displacement relative to each other in at least one defined spatial direction takes place, in particular in the form of an oscillating movement, wherein the piston ring holding device (5) has a piston (13) having a ring-shaped outer contour and having at least one circumferentially encircling piston ring groove (15), in which a piston ring (11) as piston ring element is arranged and/or inserted, **characterized in that** the piston ring holding device (5) has a cylinder element (33) which engages at least in portions around, in particular engages in a ring-shaped manner completely around, the piston (13) in the circumferential direction and which is in contact with the piston ring element (11) by way of the cylinder running surface thereof, wherein the cylinder element (33) and the piston (13) are fixed in such a way that a relative movement between the cylinder element (33) and the piston (13) is prevented.

2. Test bench device according to Claim 1, **characterized in that** the piston ring element (11) arranged in and/or introduced into the piston ring groove (15) is guided in the piston ring groove (15) with a defined axial play.

3. Test bench device according to Claim 1 or 2, **characterized in that** the cylinder element (33) and the piston (13) are fixed to an, in particular parallelepipedal, receiving block (19) of the piston ring holding device (5), and **in that** the receiving block (19) has a measuring device (54) by means of which a coefficient of friction between the piston ring element (11) and the cylinder barrel segment (12) can be ascertained.

4. Test bench device according to one of the preceding claims, **characterized in that** the cylinder element (33) has a window-like cylinder element opening (37) which provides free access to the piston ring element (11) from the outside, wherein the cylinder element opening (37) is configured and/or arranged in such a way that the cylinder barrel segment (12) mounted on the cylinder segment holding device (9) can be brought into contact with the piston ring element (11) through the cylinder element opening (37) and can be displaced relative to the piston ring element (11) in defined spatial directions.

5. Test bench device according to one of the preceding claims, **characterized in that** a lubrication device (60) is provided, by means of which a defined amount of lubricant, in particular lubricating oil, can be fed to at least the contact areas of piston ring element (11), piston ring groove (15) and cylinder barrel segment (12), wherein provision is preferably made for the defined lubricant feed rate to be approximately 2.5 µl/min.

6. Test bench device according to Claim 5, **characterized in that** the piston (13) has a lubricant duct which is fluidically connected to the piston ring groove (15) and through which and by way of which the lubricant can be conveyed into the at least one piston ring groove (15), wherein provision is preferably made for the at least one piston ring groove (15) to be formed by way of two spaced-apart ring lands and for the lubricant duct to lead into at least one of said ring lands with an inlet opening towards the piston ring groove (15).

7. Test bench device according to one of the preceding claims, **characterized in that** a piston heating element (56), in particular a heating cartridge, is provided, by means of which the piston (13) can be heated to a defined temperature, in particular approximately 350°C, and/or **in that** a cylinder barrel segment heating element (87), in particular a heating foil, is provided, by means of which the cylinder barrel segment (12) can be heated to a defined temperature, in particular approximately 130°C.

8. Test bench device according to one of Claims 3 to 7, **characterized in that** the receiving block (19) is arranged at least in portions in an internal hollow space of the piston (13) which is configured as a hollow piston, wherein the receiving block (19) is fixed to the piston (13) by means of an adapter element (17) which is arranged between the receiving block (19) and the piston (13), and wherein provision is preferably made for the piston heating element (56) to be fixed to the receiving block (19) in such a way that the heat energy of the piston heating element (56) passes into the piston (13) by way of the receiving block (19) and the adapter element (17).

9. Test bench device according to one of the preceding claims, **characterized in that** the cylinder segment holding device (9) has a specimen holder (57) and a specimen counterholder (59) which is fixed to the specimen holder (57) and to which the cylinder barrel segment (12) is fixed, wherein the specimen counterholder (59) is fixed to the specimen holder (57) so as to able to pivot and/or rotate in such a way that an angular offset between a cylinder segment axis extending in the cylinder barrel segment axial direction and a piston ring element axis extending in the piston ring element axial direction can be compensated for and/or adjusted.

10. Test bench device according to Claim 9, **characterized in that** a blocking device is provided, by means of which the pivoting and/or the rotation of the specimen counterholder (59) relative to the specimen holder (57) can be blocked and enabled, wherein provision is preferably made for the blocking apparatus to have one or more screw elements (69, 73), in particular ball pressure screws, which can be screwed into the specimen holder (57) and/or into the specimen counterholder (59) for the purposes of blocking the pivoting and/or the rotating movement.

11. Test bench device according to Claim 9 or 10, **characterized in that** the specimen counterholder (59) is of U-shaped configuration, wherein the cylinder barrel segment (12), which is manufactured in particular in the manner of a cylinder crankcase, is arranged between the U limbs (77) of the specimen counterholder (59) and/or is fixed to the U limbs (77) of the specimen counterholder (59).

12. Test bench device according to Claim 9 or 10, **characterized in that** the specimen counterholder (59) has a contact region which is adapted to the contour of a side, which faces away from the piston ring element (11), of the cylinder barrel segment (12), which is manufactured in particular in the manner of a cylinder liner, wherein, for the purposes of fixing the cylinder barrel segment (12) to the specimen counterholder (59), the cylinder barrel segment (12) can be clamped against the contact region by means of at least one clamping element (85), in particular a clamping jaw.

13. Test bench device according to one of the preceding claims, **characterized in that** a press-on device is provided, by means of which the cylinder barrel segment (12) can be pressed against the piston ring element (11) with a defined press-on force (F_{A}).

14. Test bench device according to Claim 13, **characterized in that** the cylinder segment holding device (9) is configured in such a way that the angular offset is adjusted and/or compensated for by pressing the cylinder barrel segment (12) against the piston ring element (11) with the defined press-on force (F_{A}), wherein provision is preferably made for the specimen holder (57) to have a cylindrical cutout (65), in which a cylindrical pin (67) of the specimen counterholder (59) is guided with a radial play which makes the adjustment and/or compensation of the angular offset possible.

15. Test bench device according to one of the preceding claims, **characterized in that** the cylinder barrel segment (12) is arranged above the piston ring element (11) in the vertical axis direction (z), and **in that** the cylinder barrel segment (12) can be brought into contact with the piston ring element (11) at a contact region, wherein the cylinder barrel segment (12) is fixed to the cylinder segment holding device (9) in such a way that the contact region is displaced in the cylinder barrel segment axial direction by rotating the cylinder barrel segment (12) through 180 degrees about an axis (A) extending in the vertical axis direction (z).

16. Test bench device according to one of the preceding claims, **characterized in that** a tilting device is provided, by means of which the cylinder segment holding device (9), together with the piston ring holding device (5), can be tilted from a horizontal position to a vertical position and vice versa, wherein a piston axis extending in the piston axial direction extends horizontally in the horizontal position and the piston axis extends vertically in the vertical position.

17. Test bench device according to one of the preceding claims, **characterized in that** the piston ring holding device (5) is mounted in a fixed manner, and **in that** the cylinder segment holding device (9) can be displaced relative to the fixed piston ring holding device (5) in the defined spatial directions, in particular in the piston axial direction, by means of the actuating device.

## Revendications

1. Dispositif de banc d'essai, en particulier tribomètre, destiné à analyser et/ou optimiser les propriétés tribologiques dans un système segment de piston-fût de cylindre, ledit dispositif comprenant un segment de fût de cylindre (12), en tant qu'échantillon de test, monté sur un dispositif de retenue de segment de cylindre (9), et au moins un élément de segment de piston (11) monté sur un dispositif de retenue de segment de piston (5) et pouvant être amené en appui avec le segment de fût de cylindre (12), un dispositif d'actionnement étant prévu qui permet d'actionner le segment de fût de cylindre (12) et/ou l'élément de segment de piston (11) de telle sorte que ceux-ci effectuent un déplacement relatif l'un par rapport à l'autre dans au moins une direction spatiale définie, en particulier sous la forme d'un mouvement oscillant, le dispositif de retenue de segment de piston (5) comportant un piston (13) pourvu d'un contour extérieur annulaire et d'au moins une rainure de segment de piston périphérique (15) dans laquelle un segment de piston (11) est disposé et/ou inséré en tant qu'élément de segment de piston, **caractérisé en ce que** le dispositif de retenue de segment de piston (5) comporte un élément de cylindre (33) qui entoure au moins partiellement, en particulier de manière totalement annulaire, le piston (13) dans la direction périphérique et qui est en appui, avec sa surface de fût de cylindre, sur l'élément de segment de piston (11), l'élément de cylindre (33) et le piston (13) étant fixés de manière à empêcher un mouvement relatif entre l'élément de cylindre (33) et le piston (13).

2. Dispositif de banc d'essai selon la revendication 1, **caractérisé en ce que** l'élément de segment de piston (11) disposé et/ou inséré dans la rainure de segment de piston (15) est guidé avec un jeu axial défini dans la rainure de segment de piston (15).

3. Dispositif de banc d'essai selon la revendication 1 ou 2, **caractérisé en ce que** l'élément cylindre (33) et le piston (13) sont fixés sur un bloc récepteur (19), notamment cuboïde, du dispositif de retenue de segment de piston (5), et **en ce que** le bloc récepteur (19) comporte un dispositif de mesure (54) permettant de déterminer un coefficient de friction entre l'élément de segment de piston (11) et le segment de fût de cylindre (12).

4. Dispositif de banc d'essai selon l'une des revendications précédentes, **caractérisé en ce que** l'élément de cylindre (33) comporte un évidement d'élément de cylindre (37) en forme de fenêtre qui permet un libre accès à l'élément de segment de piston (11) depuis le côté extérieur, l'évidement de l'élément de cylindre (37) étant conçu et/ou disposé de telle sorte que le segment de fût de cylindre (12), monté sur le dispositif de retenue de segment de cylindre (9), puisse être amené en appui sur l'élément de segment de piston (11) par le biais de l'évidement d"élément de cylindre (37) et puisse être déplacé dans des directions spatiales définies par rapport à l'élément de segment de piston (11).

5. Dispositif de banc d'essai selon l'une des revendications précédentes, **caractérisé en ce qu'**un dispositif de lubrification (60) est prévu qui permet d'amener une quantité définie de lubrifiant, en particulier d'huile lubrifiante au moins aux régions de contact de l'élément de segment de piston (11), de la rainure de segment de piston (15) et du segment de fût de cylindre (12), la quantité définie de lubrifiant étant de préférence prévue pour être d'environ 2,5 µl/min.

6. Dispositif de banc d'essai selon la revendication 5, **caractérisé en ce que** le piston (13) comporte un canal de lubrifiant qui est relié à la rainure de segment de piston (15) par une technique d'écoulement et par le biais duquel le lubrifiant peut être transporté jusque dans l'au moins une rainure de segment de piston (15), l'au moins une rainure de segment de piston (15) étant de préférence prévue pour être formée par deux nervures annulaires espacées l'une de l'autre et le canal de lubrifiant débouchant dans l'une au moins de ces nervures annulaires par une embouchure menant à la rainure de segment de piston (15).

7. Dispositif de banc d'essai selon l'une des revendications précédentes, **caractérisé en ce qu'**un élément de chauffage de piston (56), notamment une cartouche chauffante, est prévu qui permet de chauffer le piston (13) à une température définie, notamment d'environ 350 °C, et/ou **en ce qu'**un élément de chauffage de segment de fût de cylindre (87), en particulier un film chauffant, est prévu qui permet de chauffer le segment de fût de cylindre (12) à une température définie, en particulier d'environ 130 °C.

8. Dispositif de banc d'essai selon l'une des revendications 3 à 7, **caractérisé en ce que** le bloc récepteur (19) est disposé au moins en partie dans une cavité intérieure du piston (13) conformé en piston creux, le bloc récepteur (19) étant fixé au piston (13) au moyen d'un élément adaptateur (17), disposé entre le bloc récepteur (19) et le piston (13), et l'élément de chauffage de piston (56) étant de préférence prévu pour être fixé au bloc récepteur (19) de telle sorte que la chaleur de chauffage de l'élément de chauffage de piston (56) passe dans le piston (13) par le biais du bloc récepteur (19) et de l'élément adaptateur (17).

9. Dispositif de banc d'essai selon l'une des revendications précédentes, **caractérisé en ce que** le dispositif de retenue de segment de cylindre (9) comporte un support d'échantillon (57) et un contre-support d'échantillon (59) qui est fixé au support d'échantillon (57) sur lequel le segment de fût de cylindre (12) est fixé, le contre-support d'échantillon (59) étant fixé de manière pivotante et/ou rotative au support d'échantillon (57) de manière à pouvoir compenser et/ou régler un décalage angulaire entre un axe de segment de cylindre, s'étendant dans la direction axiale du segment de fût de cylindre, et un axe d'élément de segment de piston s'étendant dans la direction axiale de l'élément de segment de piston.

10. Dispositif de banc d'essai selon la revendication 9, **caractérisé en ce qu'**un dispositif de blocage est prévu qui permet de bloquer et de libérer le pivotement et/ou la rotation du contre-support d'échantillon (59) par rapport au support d'échantillon (57), le dispositif de blocage étant de préférence prévu pour comporter au moins un élément de vissage (69, 73), en particulier au moins une vis de pression à billes, qui peut être vissé dans le support d'échantillon (57) et/ou le contre-support d'échantillons (59) pour bloquer le pivotement et/ou la rotation.

11. Dispositif de banc d'essai selon la revendication 9 ou 10, **caractérisé en ce que** le contre-support d'échantillon (59) a une forme de U, le segment de fût de cylindre (12), notamment réalisé à la manière d'un carter-cylindre, est disposé entre les branches de U (77) du contre-support d'échantillon (59) et/ou est fixé aux branches de U (77) du contre-support d'échantillon (59).

12. Dispositif de banc d'essai selon la revendication 9 ou 10, **caractérisé en ce que** le contre-support d'échantillon (59) comporte une région d'appui dont le contour est adapté à celui d'un côté, opposé à l'élément de segment de piston (11), du segment de fût de cylindre (12), notamment réalisé à la manière d'une chemise de cylindre, le segment de fût de cylindre (12) pouvant être serré contre la région d'appui au moyen d'au moins un élément de serrage (85), en particulier d'une mâchoire de serrage, afin de fixer le segment de fût de cylindre (12) au contre-support d'échantillon (59).

13. Dispositif de banc d'essai selon l'une des revendications précédentes, **caractérisé en ce qu'**un dispositif de pression est prévu qui permet de presser le segment de fût de cylindre (12) contre l'élément de segment de piston (11) avec une force de pression définie (F_{A}).

14. Dispositif de banc d'essai selon la revendication 13, **caractérisé en ce que** le dispositif de retenue de segment de cylindre (9) est conçu de manière à effectuer le réglage et/ou la compensation du décalage angulaire par pressage du segment de fût de cylindre (12) avec la force de pression définie (F_{A}) contre l'élément de segment de piston (11), le support d'échantillon (57) étant de préférence prévu pour comporter un évidement cylindrique (65) dans lequel une broche cylindrique (67) du contre-support d'échantillon (59) est guidée avec un jeu radial permettant le réglage et/ou la compensation du décalage angulaire.

15. Dispositif de banc d'essai selon l'une des revendications précédentes, **caractérisé en ce que** le segment de fût de cylindre (12) est disposé au-dessus de l'élément de segment de piston (11) dans la direction de l'axe vertical (z), et **en ce que** le segment de fût de cylindre (12) peut être amené en appui sur l'élément de segment de piston (11) au niveau d'une région d'appui, le segment de fût de cylindre (12) étant fixé au dispositif de retenue de segment de cylindre (9) de telle sorte qu'une rotation du segment de fût de cylindre (12) de 180 degrés sur un axe (A), s'étendant dans la direction de l'axe vertical (z), déplace la région d'appui dans la direction axiale du segment de fût de cylindre.

16. Dispositif de banc d'essai selon l'une des revendications précédentes, **caractérisé en ce qu'**un dispositif de basculement est prévu qui permet de basculer le dispositif de retenue de segment de cylindre (9) ainsi que le dispositif de retenue de segment de piston (5) d'une position horizontale dans une position verticale et inversement, en position horizontale un axe de piston qui s'étend dans la direction axiale du piston s'étendant horizontalement et en position verticale, l'axe du piston s'étendant verticalement.

17. Dispositif de banc d'essai selon l'une des revendications précédentes, **caractérisé en ce que** le dispositif de retenue de segment de piston (5) est maintenu immobile, et **en ce que** le dispositif de retenue de segment de cylindre (9) est déplaçable par rapport au dispositif de retenue de segment de piston fixe (5) dans les directions spatiales définies, notamment dans la direction axiale du piston, au moyen du dispositif d'actionnement.
